Europäisches Patentamt

European Patent Office

Office européen des brevets

(19)

(11) **EP 0 713 077 B1**

(12)

# FASCICULE DE BREVET EUROPEEN

(45) Date de publication et mention
de la délivrance du brevet:
**15.12.1999 Bulletin 1999/50**

(51) Int Cl.⁶: **G01D 5/353**

(21) Numéro de dépôt: **95402557.3**

(22) Date de dépôt: **15.11.1995**

(54) **Procédé de détection et/ou de mesure de grandeurs physiques utilisant un capteur distribué**

Verfahren zum Messen und Detektieren physikalischer Grössen unter Verwendung eines Mehrpunktsensors

Detection and/or measurement procedure for physical entities using a distributed sensor

(84) Etats contractants désignés:
**CH DE DK FR GB IT LI NL SE**

(30) Priorité: **17.11.1994 FR 9413768**
**17.11.1994 FR 9413767**

(43) Date de publication de la demande:
**22.05.1996 Bulletin 1996/21**

(73) Titulaire: **ALCATEL**
**75008 Paris (FR)**

(72) Inventeur: **Tardy, André**
**F-91520 Egly (FR)**

(74) Mandataire: **Feray, Valérie et al**
**COMPAGNIE FINANCIERE ALCATEL**
**Dépt. Propriété Industrielle,**
**30, avenue Kléber**
**75116 Paris (FR)**

(56) Documents cités:
**WO-A-89/02067        GB-A- 2 268 581**
**US-A- 4 996 419       US-H- H 474**

- **ELECTRONICS LETTERS, vol. 29, no. 11, 27 Mai 1993 STEVENAGE, HERTS, GB, pages 964-966, A.D. KERSEY, W.W. MOREY 'Multi-element Bragg-grating based Fibre-laser Strain Sensor'**

## Description

La présente invention concerne un procédé de détection et/ou de mesure de variations de grandeurs physiques, telles que par exemple la température, la pression, les déformations mécaniques, le champ électrique, le champ magnétique, etc..., utilisant un capteur distribué, et plus particulièrement, un capteur distribué dans lequel la détection est effectuée au moyen d'une fibre optique.

On rappelle qu'une fibre optique est un guide d'ondes lumineuses comprenant une partie centrale dite coeur optique, à base de silice, destinée à guider la majorité des ondes lumineuses, entourée d'une partie périphérique dite gaine optique, également à base de silice, pour le guidage des ondes lumineuses non transmises par le coeur.

Il est bien connu que les fibres optiques, de par leur constitution, sont sensibles aux conditions du milieu dans lequel elles se trouvent. Notamment, une variation de température (par exemple une diminution) entraîne une contraction de la fibre ayant pour conséquence une modification de ses propriétés de guidage (augmentation de l'atténuation du signal optique) aisément détectable. Il en est de même lorsque la fibre optique est soumise par exemple à des contraintes mécaniques entraînant sa déformation, à une variation de pression, à des variations du champ électrique ou magnétique qui interagissent avec le champ électromagnétique d'une onde lumineuse transmise par la fibre.

Ainsi, dans de nombreux capteurs connus, la détection des variations de grandeurs physiques est effectuée au moyen de fibres optiques.

Certains de ces capteurs connus utilisent plus spécifiquement des fibres optiques dans lesquelles ont été inscrits des réseaux diffractants typiquement appelés réseaux de Bragg. De tels capteurs sont décrits par exemple dans le brevet US-4 996 419. On appellera dans la suite réseau de Bragg un réseau diffractant, sans que cela limite le domaine d'application de la présente invention aux seuls réseaux de Bragg.

On rappelle au préalable qu'un réseau diffractant inscrit dans le coeur d'une fibre optique est constitué d'une succession, sur une longueur donnée (le long de l'axe de la fibre optique), de variations périodiques de l'indice de réfraction du coeur de la fibre. L'effet cumulé de ces variations sur un signal lumineux transmis par la fibre est la réflexion d'une portion significative de ce signal vers son extrémité d'injection, et ce autour d'une longueur d'onde, dite longueur d'onde centrale de réflexion du réseau diffractant, fonction du pas de ce dernier et de l'indice de réfraction initial (avant l'inscription du réseau) du coeur de la fibre optique. Pour le reste du signal, le réseau diffractant est sensiblement transparent. Ainsi, un réseau diffractant inscrit dans le coeur d'une fibre optique agit à la manière d'un filtre optique à bande de rejet étroite pour le signal optique véhiculé par le coeur.

Sur le spectre de réflexion du réseau de Bragg, cela se traduit par un pic, sur un intervalle centré sur la longueur d'onde centrale de réflexion et relativement étroit autour de cette dernière, et sur le spectre de transmission, par une chute correspondante, à cette longueur d'onde.

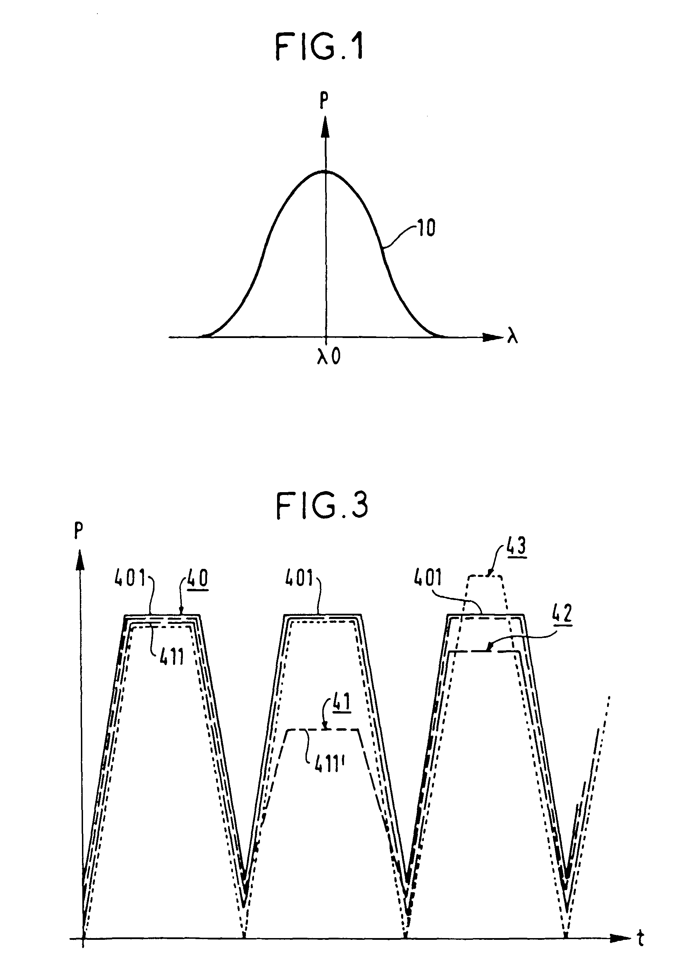

La courbe 10 de la figure 1 représente schématiquement le spectre de réflexion d'un réseau de Bragg, c'est-à-dire, en fonction de la longueur d'onde $\lambda$, la puissance P du signal réfléchi par le réseau de Bragg. $\lambda_0$ désigne la longueur d'onde centrale de réflexion du réseau de Bragg.

Les deux paramètres dont est fonction $\lambda_0$ (indice de réfraction et pas du réseau de Bragg) dépendent directement de la température, dont les variations provoquent à la fois des variations d'indice de réfraction (effet thermo-optique) et des dilatations ou contractions thermiques. Ces deux paramètres dépendent également directement des contraintes mécaniques appliquées à la fibre, de telles contraintes entraînant des déformations longitudinales de la fibre qui provoquent bien entendu des variations du pas du réseau de Bragg, ainsi que des variations d'indice par effet élasto-optique. Enfin, les paramètres dont est fonction $\lambda_0$ dépendent directement de la pression hydrostatique. Ainsi, la fibre optique à réseau de Bragg se comporte intrinsèquement comme une sonde de température, une sonde de pression ou une jauge de déformations (et donc de contraintes).

Pour ce qui est par exemple des variations de champ magnétique ou électrique, en associant la fibre optique contenant un ou plusieurs réseaux de Bragg à des moyens adaptés tels que par exemple un gainage en un matériau respectivement magnétostrictif ou piézoélectrique, induisant une déformation de la fibre sous l'effet d'une variation du champ à surveiller, on peut associer toute variation de ces grandeurs à une variation de la longueur d'onde centrale de réflexion $\lambda_0$.

Les phénomènes précédents, bien connus, sont exploités au sein de capteurs. Pour détecter des variations d'une grandeur physique à surveiller, on envoie un signal lumineux en permanence dans la fibre optique, et l'on observe le spectre en transmission ou en réflexion pour déterminer la longueur d'onde du signal réfléchi ; si cette longueur d'onde n'est pas celle, connue, obtenue dans les conditions normales ("à vide", en l'absence de variations de la grandeur physique à surveiller), on détecte une variation de la grandeur surveillée au voisinage de ce réseau ; on peut même, au moyen d'un étalonnage adapté, évaluer l'ampleur de la variation détectée en fonction de la longueur d'onde de réflexion observée.

Le brevet US-4 996 419 propose ainsi un capteur distribué comprenant une fibre optique dans laquelle ont été inscrits, à distance prédéterminée les uns des autres, une pluralité de réseaux de Bragg tous sensiblement identiques entre eux à vide (dans les conditions normales), c'est-à-dire ayant chacun sensiblement la même longueur d'onde centrale de réflexion. La distribution de ces réseaux de Bragg permet de réaliser un capteur distribué, c'est-à-dire un capteur ayant de nombreux points de détection et/ou de mesure répartis, afin de contrôler une zone géographique d'étendue importante.

Par exemple, un tel capteur peut être utilisé au voisinage d'un câble d'énergie de grande longueur afin de localiser les zones de ce câble où des élévations de température préjudiciables se produisent.

Dans le brevet mentionné précédemment, pour détecter et/ou mesurer les variations des grandeurs physiques à surveiller, on connecte à l'une des extrémités de la fibre optique une source de lumière accordable sur une plage de longueurs d'onde suffisamment large pour contenir toutes les longueurs d'onde de réflexion des réseaux de Bragg modifiées du fait des variations de ces grandeurs physiques, et l'on injecte dans la fibre optique des signaux lumineux en balayant ce spectre de longueurs d'onde. Les signaux réfléchis sont détectés et analysés à la manière décrite précédemment, et les temps correspondants d'aller-retour sont déterminés afin de localiser le point où la grandeur physique à surveiller a subi une variation.

Il est en outre indiqué dans ce brevet que le coefficient de réflexion (rapport entre la puissance du signal optique réfléchi et celle du signal optique incident) de chacun des réseaux de Bragg doit être choisi autour de 0,01 afin d'éviter les conséquences préjudiciables pour la transmission de réflexions multiples entre les différents réseaux.

La méthode décrite dans le brevet précédent n'est pas entièrement satisfaisante.

En effet, la méthode préconisée nécessite de balayer un spectre assez large, et de s'accorder le plus finement possible sur la longueur d'onde centrale de réflexion des réseaux de Bragg. Cet accord est d'autant plus fin que le spectre de réflexion des réseaux de Bragg est étroit. L'utilisation d'une source accordable de grande précision est donc nécessaire, ce qui implique l'emploi d'une instrumentation complexe et onéreuse.

Par ailleurs, le temps nécessaire pour connaître l'état de l'ensemble des points de mesure est relativement long car il faut balayer un spectre assez large et que chaque modification de la longueur d'onde de la source de lumière utilisée ne peut être obtenue qu'en un temps relativement long, voisin de la seconde (temps de stabilisation de la source à la nouvelle longueur d'onde). De plus, l'utilisation d'une source accordable à temps de stabilisation relativement long rend l'intégration difficile, de sorte que, la réponse provenant des réseaux de Bragg les plus éloignés de l'entrée du capteur ne peut être distinguée du bruit inhérent au récepteur utilisé.

D'autre part, l'utilisation pour la mise en oeuvre de la méthode du brevet US-4 996 419 du capteur décrit dans ce brevet n'est pas entièrement satisfaisante.

En effet, si l'on souhaite que ce capteur ait une très longue portée, par exemple de l'ordre de 10 km, il faut y inscrire un nombre très important de réseaux de Bragg ; par exemple, pour avoir un point de mesure tous les 2 m, 5000 réseaux sont nécessaires. Si l'on applique les coefficients de réflexion classiques, tel que celui préconisé dans le brevet précédent (0,01), la contribution des réseaux de Bragg à l'atténuation de la fibre optique est d'environ 22 dB/km à la longueur d'onde centrale de réflexion des réseaux de Bragg (choisie par exemple voisine de 1,55 μm), ce qui est très nettement supérieur à l'atténuation intrinsèque de la fibre optique (0,3 dB/km à 1,55 μm). Il n'est alors plus possible de détecter les signaux réfléchis par les capteurs situés en extrémité de fibre, car ils sont trop atténués.

Par ailleurs, on sait que pour inscrire un réseau de Bragg dans une fibre optique, il faut exposer le coeur de cette dernière, à travers la gaine optique, à un motif d'interférences obtenu à partir de deux faisceaux de lumière ultraviolette, et ce pendant un temps d'autant plus long et avec une densité d'énergie d'autant plus élevée que le coefficient de réflexion souhaité est élevé.

En outre, avec la méthode du brevet US-4 996 419, on a vu qu'il est préférable de choisir un spectre de réflexion des réseaux de Bragg étroit ; on choisira par exemple des largeurs spectrales de l'ordre de 0,1 nm. Etant donné que la largeur spectrale du spectre de réflexion d'un réseau de Bragg est inversement proportionnelle à sa longueur, la méthode proposée rend nécessaire l'utilisation de réseaux de Bragg de longueur relativement importante, en pratique de l'ordre de la dizaine de millimètres lorsque la largeur spectrale est de 0,1 nm. Or la puissance nécessaire pour inscrire un réseau de Bragg dans une fibre optique est fonction de la longueur de ce réseau.

Ainsi, l'inscription en ligne d'un très grand nombre de réseaux de Bragg ayant un coefficient de réflexion de 0,01 et une largeur spectrale relativement étroite, nécessaire pour obtenir un capteur tel que divulgué dans le brevet US-4 996 419, requiert une densité d'énergie de l'ordre de 1J/cm². Pour disposer d'une telle énergie en un temps limité (de l'ordre de 10 ns), et ce notamment afin de ne pas pénaliser l'opération de fibrage lorsque l'inscription des réseaux de Bragg est effectuée en ligne, un laser de forte puissance, encombrant, est nécessaire, ce qui complique la production industrielle de tels réseaux.

La présente invention a pour but de mettre au point un procédé utilisant un capteur distribué comprenant des réseaux diffractants tels que des réseaux de Bragg, évitant les inconvénients mentionnés précédemment.

La présente invention propose à cet effet un procédé de détection et/ou de mesure des variations d'une grandeur physique à l'aide d'un capteur distribué, au niveau d'une pluralité de points dudit capteur, dits points de mesure, ledit capteur comprenant une fibre optique comportant un coeur optique pour le guidage de la majorité des ondes lumineuses, ledit coeur optique incluant une pluralité de réseaux diffractants répartis le long de ladite fibre optique et situés chacun au niveau de l'un desdits points de mesure, lesdits réseaux diffractants ayant tous sensiblement la même longueur d'onde centrale de réflexion en l'absence de contraintes, le procédé comprenant les étapes suivantes :

- injection à l'une des extrémités de ladite fibre optique, dite extrémité d'entrée, d'un signal optique dit de détection ayant une longueur d'onde donnée voisine de ladite longueur d'onde centrale de réflexion,
- détermination, en fonction du temps, de la puissance du signal optique réfléchi, dite puissance réfléchie détectée,
- comparaison de ladite puissance réfléchie détectée en fonction du temps avec la puissance réfléchie en fonction du temps par le capteur en l'absence de variation de ladite grandeur physique, dite puissance réfléchie à vide,
- détection d'une variation de ladite grandeur physique lorsque ladite puissance réfléchie détectée est différente de ladite puissance réfléchie à vide.

Ainsi, la méthode de détection des variations de la grandeur physique à surveiller selon l'invention utilise la puissance (ou de manière équivalente l'intensité) du signal réfléchi en fonction du temps : si une variation de la grandeur physique à surveiller se produit au voisinage de l'un des réseaux diffractants, sa longueur d'onde centrale de réflexion se déplace et il ne réfléchit plus le signal émis au voisinage de cette longueur d'onde, de sorte que, sur la courbe représentant la puissance du signal réfléchi en fonction du temps, on observe, au niveau du point correspondant à ce réseau diffractant, une chute de la puissance qui traduit l'existence de la contrainte et permet donc de détecter la variation de la grandeur associée.

Il suffit d'étalonner correctement au préalable le capteur pour associer à une variation de puissance d'amplitude donnée une variation correspondante de la longueur d'onde centrale du réseau diffractant considéré et donc de la grandeur physique à surveiller.

Par rapport à la méthode divulguée dans le brevet US-4 996 419, la méthode selon l'invention est plus simple et permet l'utilisation d'une instrumentation sensiblement identique à celle utilisée dans les réflectomètres classiques, évitant notamment l'emploi d'une source accordable.

La méthode selon l'invention évite en outre d'avoir à réaliser des réseaux diffractants de bande spectrale étroite, et donc de grande longueur, puisqu'elle est fondée sur une détection de la puissance (ou de l'intensité) du signal réfléchi, et non de sa longueur d'onde.

De préférence, la longueur d'onde du signal optique de détection, qui appartient à la bande de longueurs d'onde de réflexion de chacun des réseaux diffractants, appartient à l'intervalle de longueurs d'ondes dans lequel le spectre de réflexion du réseau diffractant est sensiblement linéaire. Ainsi, dans une plage déterminée de variations de la grandeur physique à surveiller, la réponse du capteur selon l'invention est sensiblement linéaire.

En outre, de manière avantageuse, la longueur d'onde du signal optique de détection est positionnée sensiblement à mi-hauteur du spectre de réflexion des réseaux diffractants. Ainsi, on peut par exemple étalonner le capteur selon l'invention de sorte que la valeur médiane de la plage de variations de la grandeur physique à surveiller corresponde soit à l'amplitude maximale, soit à la valeur médiane de l'excursion, du signal réfléchi lorsque le signal incident a une longueur d'onde ainsi choisie.

Selon un perfectionnement du procédé de l'invention, pour s'affranchir des variations de puissance des signaux exploités dues à des atténuations accidentelles, chaque signal de détection se compose de deux impulsions lumineuses consécutives : une impulsion dont la longueur d'onde est inférieure à la longueur d'onde centrale de réflexion des réseaux diffractants, et une impulsion dont la longueur d'onde est supérieure à cette longueur d'onde centrale de réflexion, ces deux longueurs d'onde appartenant au spectre de réflexion des réseaux diffractants. La détection d'une variation d'une grandeur physique est effectuée en exploitant le rapport des puissances réfléchies détectées aux deux longueurs d'onde. Ceci a pour avantage de doubler la sensibilité de la détection ou de la mesure effectuée.

Etant donné que la largeur spectrale de la bande de réflexion d'un réseau diffractant est très faible (de l'ordre du nanomètre), l'atténuation différentielle entre les deux longueurs d'onde des impulsions constituant un signal de détection est négligeable.

Selon une caractéristique particulièrement avantageuse du procédé selon l'invention, le coeur optique du capteur inclut n réseaux diffractants, n étant un entier strictement supérieur à 50, et le coefficient maximal de réflexion de chacun desdits réseaux diffractants est compris entre $\frac{1}{20n}$ et $\frac{1}{2n}$.

L'utilisation, avec le procédé de l'invention, d'un tel capteur distribué permet d'obtenir une portée plus longue et un nombre de points de mesure plus important qu'avec la méthode et les capteurs distribués de l'art antérieur. Ce capteur est peu complexe et peu onéreux à réaliser et en rendant possible la détection de variations de grandeurs physiques au voisinage de son extrémité la plus éloignée de la source de lumière.

Le choix du coefficient de réflexion permet en effet de réaliser un capteur de longue portée comprenant un grand nombre de points de mesure par unité de longueur, qui ne subit pas de manière préjudiciable les conséquences de l'accroissement de l'atténuation de la fibre dû à la présence des réseaux diffractants (dans le même exemple que celui choisi précédemment, la contribution des réseaux diffractants à l'atténuation de la fibre optique est de 0,02 à 0,2 dB/km à la longueur d'onde centrale de réflexion des réseaux diffractants choisie voisine de 1,55 μm), et qui peut être fabriqué de manière aisée. En effet, comme on l'a vu plus haut, l'énergie d'inscription d'un réseau diffractant est approximativement proportionnelle à la profondeur de modulation de l'indice de réfraction, c'est-à-dire au coefficient de réflexion du réseau à inscrire. En pratique, le passage du coefficient de réflexion de $10^{-2}$ à $10^{-6}$ par exemple, pour un nombre de réseaux n égal à 5000, entraîne une diminution de la puissance nécessaire d'un facteur 100.

De plus, même avec un tel coefficient de réflexion, le niveau du signal réfléchi par un réseau diffractant reste supérieur à celui du signal rétrodiffusé de Rayleigh, ce qui permet de le distinguer aisément de ce dernier.

En pratique, la puissance du signal détecté réfléchi par le capteur est maximale quand le coefficient de réflexion est voisin de $\frac{1}{2n}$. Pour un coefficient de réflexion dix fois plus élevé, le niveau de la puissance maximale du signal détecté est environ huit cents fois plus faible. En revanche, pour un coefficient de réflexion dix fois plus faible, le niveau de la puissance maximale du signal détecté n'est qu'environ quatre fois plus faible.

C'est cette constatation qui a permis de résoudre les problèmes posés par l'art antérieur, en choisissant un coefficient de réflexion pour les réseaux diffractants compris entre $\frac{1}{20n}$ et $\frac{1}{2n}$.

Par ailleurs, l'utilisation de la méthode selon l'invention contribue, avec la diminution du coefficient de réflexion, à simplifier et à rendre moins onéreuse la réalisation des capteurs utilisés.

D'autres caractéristiques et avantages de la présente invention apparaîtront dans la description suivante d'un procédé et d'un dispositif de détection selon l'invention, donnée à titre illustratif et nullement limitatif.

Dans les figures suivantes :

- la figure 1 est une courbe représentant le spectre de réflexion d'un réseau de Bragg,
- la figure 2 représente très schématiquement un capteur à réseaux diffractants, comprenant les équipements associés nécessaires pour réaliser, selon l'invention, les détections et/ou mesures souhaitées,
- la figure 3 est une courbe montrant la puissance réfléchie théorique et la puissance réfléchie mesurée selon le procédé de l'invention.

Dans toutes ces figures, les éléments communs portent les mêmes numéros de référence.

La figure 1 a été décrite en relation avec l'état de la technique.

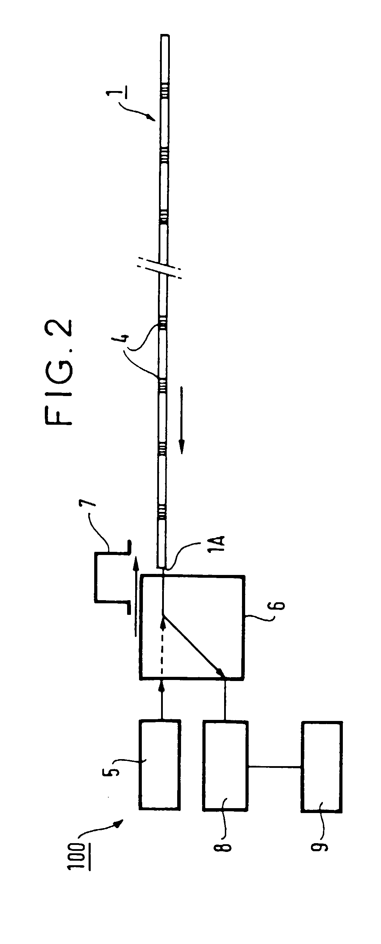

Un capteur 100 pour la détection et/ou la mesure des variations de grandeurs physiques, utilisant une fibre optique monomode 1 comme sonde, est illustré très schématiquement en figure 2. La fibre 1 comprend un coeur optique entouré d'une gaine optique (non représentés), tous deux en un matériau à base de silice. Dans le coeur de la fibre optique 1 sont inscrits des réseaux de Bragg 4, tous identiques les uns aux autres, c'est-à-dire ayant tous sensiblement la même longueur d'onde de réflexion.

Chaque réseau de Bragg 4 est constitué d'une succession de variations périodiques de l'indice de réfraction du coeur de la fibre optique 1, sur une courte longueur de fibre, par exemple 1 à 2 mm, ces variations étant représentées schématiquement par des traits verticaux au niveau de chacun des réseaux de Bragg 4.

La distance L entre deux réseaux de Bragg 4 consécutifs (mesurée par exemple entre le centre de chacun d'eux) peut être constante, ainsi que représenté en figure 2 ; elle est par exemple égale à 1 m. En pratique, la distance entre les différents réseaux de Bragg peut être quelconque, et elle est adaptée à l'élément (câble d'énergie par exemple) ainsi qu'à la grandeur physique à surveiller.

Selon l'invention, le coefficient de réflexion de chacun des réseaux de Bragg est choisi entre $\frac{1}{20n}$ et $\frac{1}{2n}$, ou égal à l'une de ces valeurs, et ce, comme expliqué plus haut, à la fois pour éviter un accroissement excessif de l'atténuation de la fibre 1 dû à l'existence de réflexions par les différents réseaux de Bragg, et pour que le niveau du signal réfléchi reste supérieur à celui du signal rétrodiffusé de Rayleigh.

Dans le capteur 100, la fibre optique 1 est utilisée, lorsque cela est nécessaire (voir plus haut) en association avec des moyens (non représentés) permettant de traduire des variations des grandeurs physiques à surveiller par des contraintes mécaniques qui lui sont appliquées.

Chacun des réseaux de Bragg 4 de la fibre 1 constitue donc un point de mesure, c'est-à-dire un point sensible aux variations de la grandeur physique à surveiller, permettant au capteur 100 de jouer son rôle.

Ainsi, pour utiliser le capteur 100 comme capteur de température, étant donné que la fibre 1 est intrinsèquement sensible aux variations de température, il suffit de placer cette dernière au voisinage du corps à surveiller, dans un tube de protection contre les perturbations mécaniques extérieures.

Pour utiliser le capteur 100 comme jauge de déformations ou de contraintes, on peut par exemple surmouler la fibre 1 nue dans une résine sur la longueur de chacun des réseaux de Bragg 4 puis la rendre solidaire, par exemple par collage, du corps à surveiller.

Pour utiliser le capteur 100 comme capteur de pression hydrostatique d'un fluide, on peut placer la fibre 1 dans une enceinte communiquant avec celle du fluide à surveiller.

Enfin, pour utiliser le capteur 100 pour détecter et/ou mesurer des variations des champs magnétique ou électrique, ou d'autres grandeurs encore, comme par exemple pour détecter la présence d'eau, on peut revêtir la fibre 1, comme décrit précédemment, d'un matériau sensible à ces grandeurs.

Le capteur 100 comporte par ailleurs une source lumineuse laser 5 couplée à une extrémité 1A de la fibre 1 par l'intermédiaire d'un coupleur 6. Cette source 5 permet d'envoyer dans la fibre 1, aux fins de la détection et/ou de la mesure de la grandeur physique à surveiller, des signaux dits de détection sous forme d'impulsions optiques 7.

La largeur temporelle $\tau$ des impulsions optiques 7 émises est choisie en fonction de la distance minimale L existant entre deux réseaux de Bragg 4 consécutifs, de sorte que, à la longueur d'onde des impulsions 7, qui est par exemple voisine de la longueur d'onde centrale de réflexion $\lambda_0$ des réseaux de Bragg 4, et de préférence choisie autour de 1,55 µm, les signaux réfléchis par ces derniers ne se chevauchent pas. En pratique, on choisira par exemple $\tau \leq 2L/V_g$, $V_g$ étant la vitesse de groupe de l'onde optique.

En outre, du fait de la simplicité de l'électronique d'acquisition rendue possible grâce au procédé selon l'invention, cette simplicité limitant la fréquence de l'électronique à 100 MHz, la largeur temporelle $\tau$ est en pratique supérieure à 10 ns. Ainsi, $\tau$ est faible devant la largeur temporelle correspondant à la longueur de chacun des réseaux de Bragg 4, de sorte que les impulsions réfléchies ont une forme sensiblement identique à celles de l'impulsion incidente. Dès lors, si l'on calibre l'impulsion incidente pour qu'elle présente un plateau relativement long, l'impulsion réfléchie présentera également un tel plateau, qui facilite l'acquisition de plusieurs échantillons permettant de mesurer sa hauteur, et donc de déterminer l'amplitude de la puissance réfléchie détectée de manière très précise. On effectue ainsi des mesures de grande précision.

Le fait de choisir une très courte longueur pour les réseaux de Bragg 4 permet de s'affranchir, lorsque la zone où se produisent les variations de la grandeur physique à surveiller est très localisée, de l'incertitude liée à l'intégration réalisée sur la longueur de la fibre 1 équivalente à la largeur de l'impulsion incidente.

Le capteur 100 comporte en outre un récepteur 8 couplé à l'extrémité 1A de la fibre 1 par l'intermédiaire du coupleur 6, pour recevoir les signaux réfléchis par la fibre 1 en réponse à une impulsion incidente 7.

Le récepteur 8 est relié à des moyens de visualisation 9, par exemple un oscilloscope, pour visualiser les signaux réfléchis. Ces derniers seront décrits plus précisément en relation avec la figure 3.

On va maintenant décrire un procédé de détection et un procédé de mesure des variations d'une grandeur physique selon l'invention, par exemple la température, à l'aide d'un capteur 100.

Le capteur 100 est par exemple disposé parallèlement et au voisinage immédiat d'un câble d'énergie dont on souhaite détecter les échauffements locaux, ces échauffements pouvant à terme être préjudiciables au bon fonctionnement du câble. Au sein du capteur 100, la fibre optique 1 est soumise aux variations de température, de sorte que l'on peut associer à une variation locale de température une variation correspondante de la longueur d'onde centrale de réflexion du réseau de Bragg se trouvant au voisinage de la zone où la température varie.

A l'aide de la source optique 5, on émet régulièrement des signaux de détection sous forme d'impulsions lumineuses 7. De préférence, la période d'émission de ces impulsions est supérieure au temps nécessaire à la réflexion d'une impulsion par le réseau de Bragg le plus éloigné de l'extrémité 1A de la fibre 1.

La longueur d'onde des impulsions lumineuses 7 est choisie, dans une première variante, sensiblement égale à la longueur d'onde centrale de réflexion $\lambda_0$ des réseaux de Bragg.

Si aucune variation de température ne se produit au niveau de l'un des réseaux de Bragg, le signal réfléchi de la fibre 1 en réponse à l'émission de l'impulsion 7 a la forme montrée par la courbe 40 en figure 3, qui représente la puissance réfléchie P en fonction du temps : on voit que le signal réfléchi se compose d'une succession d'impulsions 401 correspondant chacune à la réponse d'un réseau de Bragg distinct ; toutes les impulsions 401 sont sensiblement identiques entre elles et à l'impulsion incidente 7.

Si une variation de température se produit au niveau de l'un des réseaux de Bragg, le signal réfléchi par le capteur 100 suite à l'émission de l'impulsion incidente 7 a la forme montrée par la courbe 41 en figure 3 : les impulsions réfléchies 411 correspondant aux réseaux de Bragg au niveau desquels aucune variation de température ne s'est produite sont identiques entre elles (voir celles de la courbe 40) ; en revanche, l'impulsion 411' réfléchie par le réseau de Bragg au voisinage duquel s'est produite la variation de température a une amplitude différente de celle des autres (supérieure ou inférieure selon que l'on détecte une augmentation ou une diminution de température).

Ainsi, la simple observation du fait que la courbe 41 est différente de la courbe 40 sur les moyens de visualisation 9 permet de détecter qu'une variation de température s'est produite. Il en va bien évidemment de même lorsque plusieurs variations se sont produites en plusieurs endroits distincts.

En déterminant le temps écoulé entre l'émission de l'impulsion incidente et l'instant de réception d'une impulsion réfléchie, on obtient directement la localisation du réseau de Bragg ayant réfléchi cette impulsion, et par conséquent le point du câble au voisinage duquel cette variation s'est produite

Si l'on souhaite mesurer l'amplitude de la variation de température détectée, il suffit d'étalonner au préalable le capteur 100 pour associer par exemple à chaque variation de température l'amplitude maximale correspondante de l'impulsion réfléchie.

Pour détecter ou mesurer les variations de la grandeur physique à surveiller, on peut, comme on l'a vu plus haut, simplement observer le signal réfléchi ; on peut également calculer la différence ou le rapport, à chaque instant t, entre la puissance P du signal réfléchi tel que détecté, dite puissance réfléchie détectée, et la puissance $P_0$, dite puissance réfléchie à vide, du signal réfléchi par le capteur "à vide", c'est-à-dire en l'absence de toute variation de la grandeur physique à surveiller. Lorsque cette différence ou ce rapport dépasse un seuil prédéterminé, on détecte alors la présence d'une variation à l'instant correspondant (c'est-à-dire au point correspondant), et l'on peut éventuellement mesurer son amplitude.

Avantageusement, la longueur d'onde du signal optique de détection, qui appartient à la bande de longueurs d'onde de réflexion de chacun des réseaux diffractants, appartient à l'intervalle de longueurs d'ondes dans lequel le spectre de réflexion des réseaux de Bragg 4 est sensiblement linéaire. De plus, la longueur d'onde du signal optique de détection peut être positionnée sensiblement à mi-hauteur du spectre de réflexion des réseaux de Bragg 4.

Selon un autre perfectionnement de l'invention, pour s'affranchir des variations accidentelles d'atténuation de la fibre 1, chaque signal de détection incident se compose de deux impulsions consécutives, l'une centrée sur une longueur d'onde $\lambda_1$ inférieure à $\lambda_0$, et l'autre centrée sur une longueur d'onde $\lambda_2$ supérieure à $\lambda_0$, les différences entre $\lambda_0$ et $\lambda_1$ et entre $\lambda_0$ et $\lambda_2$ étant sensiblement identiques ; $\lambda_1$ et $\lambda_2$ appartiennent bien évidemment au spectre de réflexion des réseaux de Bragg. Lorsqu'une variation de température s'est produite au niveau de l'un des réseaux de Bragg, on obtient le signal réfléchi représenté en figure 3 par la courbe 42 à la longueur d'onde $\lambda_1$, et par la courbe 43 à la longueur d'onde $\lambda_2$, et l'on effectue le rapport à chaque instant entre l'amplitude maximale des deux réponses aux deux impulsions incidentes. Lorsque ce rapport est différent d'un seuil préétabli, on détecte une variation de la grandeur physique à surveiller et l'on peut mesurer cette variation si l'on a procédé au préalable à un étalonnage adéquat.

Ce perfectionnement permet d'obtenir pour un capteur selon l'invention une sensibilité voisine de 1%/°C.

On constate d'après ce qui précède que le procédé de détection ou de mesure selon l'invention est bien plus simple que celui utilisé dans l'art antérieur, car il correspond en pratique à celui utilisé dans les méthodes classiques de réflectométrie.

Bien entendu, la présente invention n'est pas limitée au mode de réalisation et aux procédés qui viennent d'être décrits, et l'on pourra remplacer tout moyen par un moyen équivalent sans sortir du cadre de l'invention.

## Revendications

1. Procédé de détection et/ou de mesure des variations d'une grandeur physique à l'aide d'un capteur (100) distribué, au niveau d'une pluralité de points dudit capteur, dits points de mesure, ledit capteur comprenant une fibre optique (1) comportant un coeur optique pour le guidage de la majorité des ondes lumineuses, ledit coeur optique incluant une pluralité de réseaux diffractants (4) répartis le long de ladite fibre optique (1) et situés chacun au niveau de l'un desdits points de mesure, lesdits réseaux diffractants (4) ayant tous sensiblement la même longueur d'onde centrale de réflexion en l'absence de contraintes,

   ledit procédé comprenant les étapes suivantes :

   - injection à l'une des extrémités (1A) de ladite fibre optique (1), dite extrémité d'entrée, d'un signal optique (7) dit de détection ayant une longueur d'onde donnée voisine de ladite longueur d'onde centrale de réflexion,
   - détermination, en fonction du temps, de la puissance du signal optique réfléchi, dite puissance réfléchie détectée,
   - comparaison de ladite puissance réfléchie détectée en fonction du temps avec la puissance réfléchie en fonction du temps par le capteur (100) en l'absence de variation de ladite grandeur physique, dite puissance réfléchie à vide,
   - détection d'une variation de ladite grandeur physique lorsque ladite puissance réfléchie détectée est différente de ladite puissance réfléchie à vide.

2. Procédé selon la revendication 1 tel que la longueur d'onde donnée dudit signal optique de détection (1), qui appartient à la bande de longueurs d'onde de réflexion de chacun desdits réseaux diffractants (4), appartient à l'intervalle de longueurs d'onde dans lequel le spectre de réflexion desdits réseaux diffractants est sensiblement linéaire.

3. Procédé selon l'une des revendications 1 ou 2 tel que la détection d'une variation d'une grandeur physique est effectuée en déterminant le rapport à chaque instant entre la puissance réfléchie détectée et la puissance réfléchie à vide, et en comparant ce rapport à un seuil prédéterminé.

4. Procédé selon l'une des revendications 1 ou 2 tel que chaque signal de détection se compose de deux impulsions lumineuses ($\lambda_1, \lambda_2$) consécutives, soit une impulsion ($\lambda_1$) dont la longueur d'onde donnée appartient au spectre de réflexion des réseaux diffractants et est inférieure à ladite longueur d'onde centrale de réflexion ($\lambda_0$) et une impulsion ($\lambda_2$) dont la longueur d'onde donnée appartient au spectre de réflexion des réseaux diffractants et est supérieure à ladite longueur d'onde centrale de réflexion ($\lambda_0$), et la détection d'une variation d'une grandeur physique est effectuée en exploitant le rapport des puissances réfléchies détectées aux deux lon-

gueurs d'onde ($\lambda_1$, $\lambda_2$) des deux impulsions lumineuses.

5. Procédé selon l'une des revendications 1 à 3 tel que, pour mesurer la variation de ladite grandeur, on effectue au préalable un étalonnage de manière à associer à toute amplitude de ladite puissance réfléchie détectée une amplitude correspondante de ladite grandeur.

6. Procédé selon l'une des revendications 1 à 5 tel que, le coeur optique dudit capteur (100) incluant n réseaux diffractants (4), où n est un entier strictement supérieur à 50, le coefficient maximal de réflexion de chacun desdits réseaux diffractants (4) est compris entre $\frac{1}{20n}$ et $\frac{1}{2n}$.

**Claims**

1. A method of detecting and/or measuring changes in a physical magnitude by means of a distributed sensor (100), changes being detected and/or measured at a plurality of "measurement" points along said sensor, said sensor comprising an optical fiber (1) having an optical core for guiding the majority of light waves, said optical core including a plurality of diffraction gratings (4) distributed along said optical fiber (1), each situated at one of said measurement points, said diffraction gratings (4) all having substantially the same central reflection wavelength in the absence of strain,
said method comprising the following steps:

   · injecting a "detection" light signal into an "inlet" end (1A) of said optical fiber (1), the given wavelength of the light signal (7) being close to said central reflection wavelength;
   · determining the power of the reflected signal, referred to as the "detected reflected power", as a function of time;
   · comparing said detected reflected power as a function of time with the power reflected as a function of time by the sensor (100) in the absence of any change in said physical magnitude, referred to as the "idle" reflected power; and
   · detecting change in said physical magnitude whenever said detected reflected power differs from said idle reflected power.

2. A method according to claim 1, such that the given wavelength of said detection light signal (1) which lies in the band of reflection wavelengths for each of said diffraction gratings (4), lies in the range of wavelengths for which the reflection spectrum from said diffraction gratings is substantially linear.

3. A method according to claim 1 or 2, such that a change of a physical magnitude is detected at each instant by determining the ratio of the detected reflected power to the idle reflected power, and by comparing said ratio with a predetermined threshold.

4. A method according to claim 1 or 2, such that each detection signal comprises two consecutive light pulses ($\lambda_1$, $\lambda_2$) a pulse ($\lambda_1$) whose given wavelength belongs to the reflection spectrum of the diffraction gratings and is less than said central reflection wavelength ($\lambda_0$), and a pulse ($\lambda_2$) whose given wavelength belongs to the reflection spectrum of the diffraction gratings and is greater than said central reflection wavelength ($\lambda_0$), and a change in a physical magnitude is detected by making use of the ratio of the detected reflected powers at the two wavelengths ($\lambda_1$, $\lambda_2$) of the two light pulses.

5. A method according to any one of claims 1 to 3, such that to measure a change in said magnitude, prior calibration is performed so as to associate each amplitude of said detected reflected power with a corresponding amplitude of said magnitude.

6. A method according to any one of claims 1 to 5, such that for an optical core of said sensor (100) containing n̲ diffraction gratings (4), where n̲ is an integer greater than 50, the maximum reflection coefficient of each of said diffraction gratings (4) lies in the range 1/20n to 1/2n.

**Patentansprüche**

1. Verfahren zum Erfassen und/oder Messen von Änderungen einer physikalischen Größe mit Hilfe eines Mehrpunktsensors (100) in Höhe einer Vielzahl von Punkten des Sensors, die Messpunkte genannt werden, wobei der Sensor eine optische Faser (1) umfasst, die einen optischen Kern zum Leiten des Hauptteils der Lichtwellen aufweist, wobei der optische Kern eine Vielzahl von beugenden Gittern (4) einschließt, die entlang der optischen Faser (1) verteilt sind und sich jeweils in Höhe eines der Messpunkte befinden, wobei die beugenden Gitter (4) alle im Wesentlichen die gleiche zentrale Reflexionswellenlänge bei Abwesenheit von Belastungen aufweisen,
wobei das Verfahren die folgenden Schritte umfasst:

   - Einkopplung eines optischen Signals (7), Erfassungssignal genannt, mit einer gegebenen Wellenlänge in der Nähe der zentralen Reflexionswellenlänge an einem der Enden (1A) der optischen Faser (1), Eingangsende genannt,

- Bestimmen der Leistung des reflektierten optischen Signals, erfasste reflektierte Leistung genannt, als Funktion der Zeit,

- Vergleich der erfassten reflektierten Leistung als Funktion der Zeit mit der vom Sensor (100) bei Abwesenheit einer Änderung der physikalischen Größe reflektierten Leistung als Funktion der Zeit, reflektierte Leerleistung genannt,

- Erfassung einer Änderung der physikalischen Größe, wenn die erfasste reflektierte Leistung von der reflektierten Leerleistung verschieden ist.

2. Verfahren nach Anspruch 1, bei dem die gegebene Wellenlänge des optischen Erfassungssignals (1), die zum Reflexionswellenlängenband jedes der beugenden Gitter (4) gehört, zu dem Wellenlängenintervall gehört, in welchem das Reflexionsspektrum der beugenden Gitter im Wesentlichen linear ist.

3. Verfahren nach einem der Ansprüche 1 oder 2, bei dem die Erfassung einer Änderung einer physikalischen Größe erfolgt, indem das Verhältnis zwischen der erfassten reflektierten Leistung und der reflektierten Leerleistung zu jedem Zeitpunkt bestimmt wird und indem dieses Verhältnis mit einer vorbestimmten Schwelle verglichen wird.

4. Verfahren nach einem der Ansprüche 1 oder 2, bei dem sich jedes Erfassungssignal aus zwei aufeinanderfolgenden Lichtpulsen ($\lambda_1$, $\lambda_2$) zusammensetzt, nämlich einem Puls ($\lambda_1$), dessen gegebene Wellenlänge zum Reflexionsspektrum der beugenden Gitter gehört und kleiner als die zentrale Reflexionswellenlänge ($\lambda_0$) ist, und einem Puls ($\lambda_2$), dessen gegebene Wellenlänge zum Reflexionsspektrum der beugenden Gitter gehört und größer als die zentrale Reflexionswellenlänge ($\lambda_0$) ist, und die Erfassung einer Änderung einer physikalischen Größe erfolgt, indem das Verhältnis der erfassten reflektierten Leistungen bei den beiden Wellenlängen ($\lambda_1$, $\lambda_2$) der beiden Lichtpulse genutzt wird.

5. Verfahren nach einem der Ansprüche 1 bis 3, bei dem zum Messen der Änderung der Größe im Voraus eine Abtastung derart durchgeführt wird, dass jeder Amplitude der erfassten reflektierten Leistung eine entsprechende Amplitude der Größe zugeordnet wird.

6. Verfahren nach einem der Ansprüche 1 bis 5, bei dem der maximale Reflexionskoeffizienten jedes der beugenden Gitter (4) zwischen $\frac{1}{20n}$ und $\frac{1}{2n}$ liegt wenn der optische Kern des Sensors (100) n beugende Gitter (4) beinhaltet, wobei n eine ganze Zahl streng größer als 50 ist.

# FIG.1

# FIG.3

# FIG. 2